# EUROPÄISCHE PATENTSCHRIFT

(11) **EP 0 570 678 B1**
(45) Veröffentlichungstag und Bekanntmachung des Hinweises auf die Patenterteilung: **30.08.1995**
(21) Anmeldenummer: 93104216.2
(22) Anmeldetag: 16.03.1993
(51) Int. Cl.: B23K 9/09

(54) **Verfahren zur Regelung des Schweissstromes in Abhängigkeit der Schweissgeschwindigkeit bei Lichtbogenschweisseinrichtungen**
Method for controlling the welding current in response to the welding speed in arc welding devices
Méthode de réglage du courant de soudage en fonction de la vitesse de soudage pour des installations de soudage à arc

(30) Priorität: 20.05.1992 DE 4216594
(43) Veröffentlichungstag der Anmeldung: 24.11.1993
(73) Patentinhaber: kabelmetal electro GmbH, 30002 Hannover (DE)
(72) Erfinder: Klebl, Wolfram, Dipl.-Ing., W-3004 Isernhagen 2 (DE); Metz, Jens, Dipl.-Ing., W-3006 Burgwedel 1 (DE)

(56) Entgegenhaltungen:
- EP-A- 0 451 464
- GB-A- 2 240 888
- US-A- 3 544 760
- PATENT ABSTRACTS OF JAPAN vol. 5, no. 050 (M-062)9. April 1981 & JP-A-56 004 377 (DAIHEN CORP) 17. JANUAR 1981

## Beschreibung

Die vorliegende Erfindung betrifft ein Verfahren zur Regelung des Schweißstromes in Abhängigkeit von der Schweißgeschwindigkeit bei Gleichstrom-Lichtbogenschweißeinrichtungen zur kontinuierlichen Längsnahtverschweißung zum Rohr geformter Metallbänder, bei dem zu einem einstellbaren Festspannungswert ein schweißgeschwindigkeitsabhängiger Spannungswert addiert wird.

Bekannt ist bereits eine Schaltungsanordnung (DE-OS 19 00 856), bei welcher die Elektroden der Schweißeinrichtung aus einer Spannungsquelle über einen Transformator, ein den Schweißstrom einstellendes Stellglied und einen geschwindigkeitsabhängigen Tachogenerator beeinflußt werden. Dabei sind Mittel zur Regelung der Höhe des Schweißstromes in Abhängigkeit von der Speisespannung, dem Elektrodenabstand und von Temperaturschwankungen vorgesehen. Bei einer solchen Regelschaltung für die Gleichstromschweißung wird der Schweißstrom-Istwert ständig gemessen und mittels einer Störgrößenaufschaltung bei schon geringsten Schwankungen das Stellglied beeinflußt, so daß die Schweißstromstärke den jeweils gegebenen Anforderungen entspricht. Die Regelung kann kurzfristig vorgenommen werden, so daß sich Schwankungen der Speisespannung, des Elektrodenabstandes oder auch Temperaturveränderungen bezüglich des Schweißstromes nicht bemerkbar machen, sondern die Schweißstromstärke immer den Wert erhält, welcher zur Durchschweißung der Schweißnaht jeweils erforderlich ist.

Schwierigkeiten ergeben sich jedoch dann, wenn erhöhte Fertigungsgeschwindigkeiten verlangt werden und unterschiedliche Metalle bzw. Bandstärken zum Einsatz kommen. Dann ist nicht mehr gewährleistet, daß mit der bisherigen Regelung einwandfreie Schweißnähte hergestellt werden können.

Um hier weiterzukommen, hat man bereits vorgesehen EP-A-0 451 464, daß zu einem einstellbaren Festspannungswert ein geschwindigkeitsabhängiger Spannungswert addiert wird. Die Einstellung eines Festspannungswertes, etwa in Abhängigkeit von der gewählten Banddicke, bewirkt eine Nullpunktsverschiebung im Strom-Geschwindigkeitsdiagramm, während die Addition des geschwindigkeitsabhängigen Spannungswertes zu der im jeweiligen Nullpunkt beginnenden Schweißstromkennlinie führt. Diese Maßnahme ermöglicht die Wahl beliebiger Stromwerte in Abhängigkeit von der Schweißgeschwindigkeit, die Anpassung an beliebige Schweißbedingungen ist zwar möglich, dieses bekannte Verfahren ist jedoch nicht einsetzbar in all den Fällen, in denen insbesondere in neuerer Zeit dazu übergegangen wird, bei einem Verschweißen in kontinuierlichem Durchlauf den Schweißstrom zu takten, um die Wärmeeinwirkung auf die zu verschweißenden Materialien, insbesondere im Bereich des aufgeschmolzenen Metalls, zu reduzieren.

Hier sieht die Erfindung eine Verbesserung des bekannten Verfahrens vor. Gemäß der Erfindung wird der Summe aus geschwindigkeitsabhängigem Spannungswert und einstellbarem Festspannungswert ein gepulster Gleichspannungswert überlagert, der durch Addition eines einstellbaren Festspannungswertes sowie eines Schweißgeschwindigkeitsabhängigen Spannungswertes gebildet wird, dessen Frequenz und Amplitude in gleicher Weise von der Schweißgeschwindigkeit abhängt. Damit ist sichergestellt, daß der Schweißstrom in Abhängigkeit von der Fertigungsgeschwindigkeit derart regelbar ist, daß ein problemloses Schweißen beliebiger Metalle und Metallbänder unterschiedlicher Banddicken bei geringst möglicher Wärmeeinbringung erreicht wird.

Eine Anpassung an beliebige Betriebsbedingungen ist möglich, Längsnahtschweißungen lassen sich problemlos durchführen. In diesem Zusammenhang ist es besonders vorteilhaft, wenn der einstellbare Festspannungswert zur Grundfrequenz- bzw. Grundamplitudeneinstellung dient, während der schweißgeschwindigkeitsabhängige Spannungswert zur Änderung der Grundfrequenz und/oder der -amplitude herangezogen wird.

Zur Durchführung des Verfahrens nach der Erfindung hat sich eine Schaltungsanordnung als zweckmäßig erwiesen, bei der die Schweißelektroden aus einer Spannungsquelle über einen Transformator, ein den Schweißstrom einstellendes Stellglied sowie Gleichrichterelemente gespeist werden, wobei das Stellglied von einem schweißgeschwindigkeitsabhängigen Tachogenerator beeinflußt wird, der einem Regler zugeschaltet ist. Hierbei sind der Tachogenerator und eine Festspannungsquelle mit ihren Ausgängen getrennt mit den Eingängen eines Summierverstärkers verbunden, dessen Ausgang auf einen Eingang des Schweißstromreglers einwirkt, während ein weiterer Eingang dieses Reglers mit dem Gleichstromwandler verbunden ist. Bei dieser Anordnung ist eine unmittelbare gegenseitige Beeinflussung bei der Addition der beiden Spannungswerte ausgeschlossen, es wurden klare elektrische Verhältnisse geschaffen. Die Ausgangsspannung des Summierverstärkers wird dann dem Eingang eines Schweißstromreglers zugeführt, während der andere Eingang dieses Reglers vom Stromwandler her mit dem Schweißstrom-Istwert gespeist wird. Wesentlich für die Erfindung ist nun in diesem Zusammenhang, daß dem genannten Summierverstärker ein zweiter Summierverstärker nachgeschaltet ist, dessen weiterer Eingang von einem Spannungs-/Frequenzwandler gespeist wird, dessen Eingänge zwei weitere Summierverstärker mit jeweils ihren Eingängen zugeschaltete Tachogenerator und Festspannungsquelle angeschlossen sind. Zur Erzeugung aller schweißgeschwindigkeitsabhängigen Spannungswerte kann eine entsprechende Anzahl von Tachogeneratoren eingesetzt werden, besonders vorteilhaft ist es jedoch insbesondere mit Hinblick auf eine Vereinfachung der schaltungstechnischen Maßnahmen, wenn zur Erzeugung aller schweißgeschwindigkeitsabhängigen Spannungswerte ein einziger Tachogenerator verwendet wird.

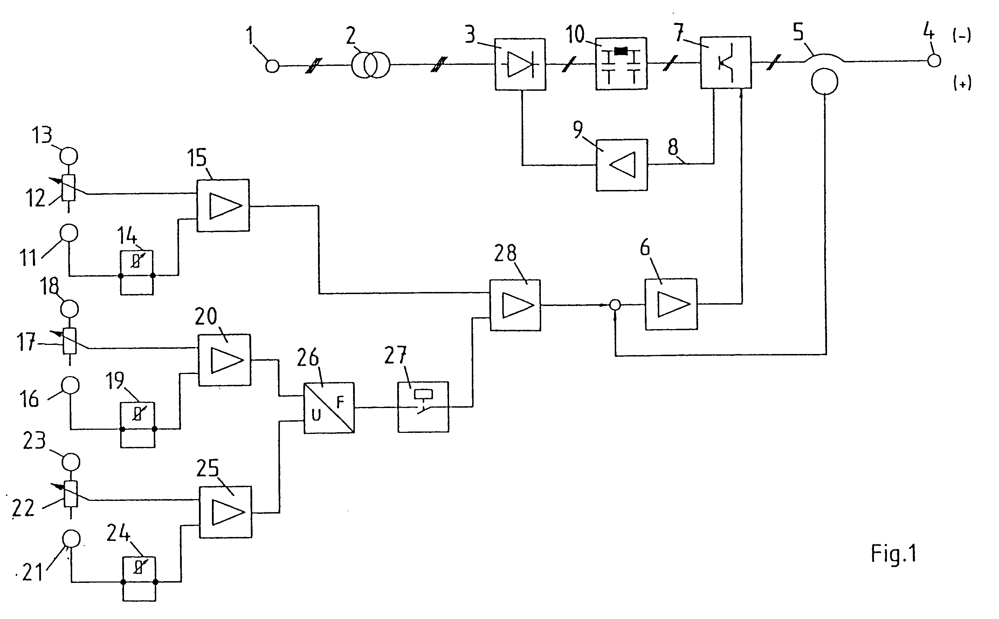

Die Erfindung sei anhand der in den Figuren 1 bis 5 dargestellten Ausführungsbeispiele näher erläutert.

Wie aus der Fig. 1 ersichtlich, ist mit 1 die Speisespannungsquelle bezeichnet, bei welcher es sich beispielsweise um das 50 Hz-Wechselstromnetz handeln kann. An die Spannungsquelle 1 ist der Transformator 2 angeschlossen, der sekundärseitig mit dem Thyristor 3 verbunden ist. Zwischen den mit (+) und (-) bezeichneten Elektroden 4 der Schweißeinrichtung und dem Thyristor 3, dem Siebglied 10 und dem Transistorsteller 7 ist ein Gleichstromwandler 5 angeschlossen, an welchem sekundärseitig eine dem Istwert des Schweißstromes entsprechende Spannung abgegriffen und dem Regler 6 als Istwert zugeführt werden kann.

Wesentlich für die Erfindung ist nun, daß der Regler 6 mit einer dem Sollwert entsprechenden Spannung beaufschlagt wird, die sich aus einem einstellbaren Festspannungswert und einem geschwindigkeitsabhängigen Spannungswert ergibt, wobei der Summe aus geschwindigkeitsabhängigem Spannungswert und einstellbarem Festspannungswert ein gepulster Gleichspannungswert überlagert wird. Um das zu erreichen, ist ein Tachogenerator 11 und eine über den Stellwiderstand 12 einstellbare Spannungsquelle 13 vorgesehen. Mit 14 ist ein Stufenschalter bezeichnet. Der vom Tachogenerator 11 und der Festspannungsquelle 13 mit Hilfe des Summierverstärkers 15 ermittelte Gesamtspannungswert wird an den Summierverstärker 28 gegeben, der mit dem Regler 6 verbunden ist.

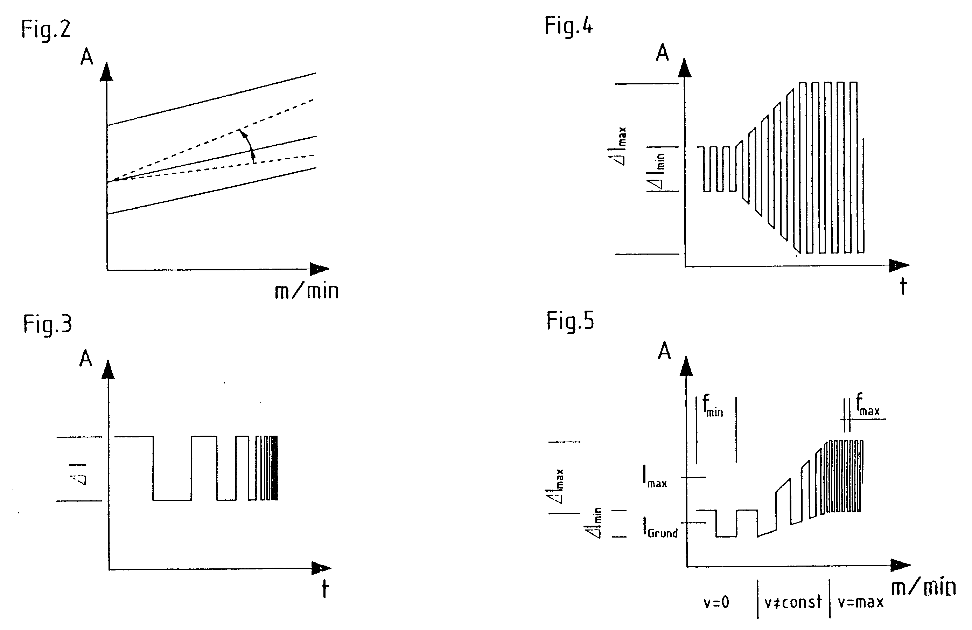

Die Fig. 2 zeigt einen auf diese Weise erzeugten Schweißstrom in Abhängigkeit von der Fertigungsgeschwindigkeit. Die in der Figur parallel verlaufenden Linien kennzeichnen den durch den einstellbaren Widerstand 12 eingestellten Grundstromanteil des Schweißstromes, während die gestrichelte Linie Möglichkeiten wiedergibt, die sich aus der geschwindigkeitsabhängigen Tachospannung ergeben. Über vorgeschaltete Widerstände läßt sich die Steigung des Schweißstromes für verschiedene Bandsorten beispielsweise oder Bandmaterialien fest einstellen.

Zur geschwindigkeitsabhängigen Schweißstromregelung aus einem Gleichstromanteil und überlagertem Pulsanteil kommt es darauf an, sowohl die Amplitude als auch die Frequenz des gepulsten Gleichstromanteiles von der Schweißgeschwindigkeit abhängig zu halten. Hierzu dient, wie aus der Fig. 1 ersichtlich, ein weiterer Tachogenerator 16 sowie eine über einen einstellbaren Widerstand 17 fest einstellbare Spannungsquelle 18. Mit 19 ist ein Stufenschalter bezeichnet, Tachogenerator 16 und Festspannungsquelle 18 sind dem Summierverstärker 20 zugeschaltet, der die aus den beiden Spannungsquellen gelieferten Spannungswerte überlagert. Dabei dient die Festspannungsquelle 18 zur Einstellung der Grundamplitude, während die geschwindigkeitsabhängige Spannung des Tachogenerators zur geschwindigkeitsabhängigen Amplitudeneinstellung verwendet wird.

Um eine geschwindigkeitsabhängige Frequenz des gepulsten und überlagerten Gleichstromanteiles zu erreichen, ist eine dritte Festspannungsquelle 23 vorgesehen, der Spannungswert ist über den Stellwiderstand 22 einstellbar. Ein dritter Tachogenerator 21 liefert über den Stufenschalter 24 eine geschwindigkeitsabhängige Spannung, beide Spannungswerte werden dem Summierverstärker 25 zugeführt. In diesem Falle dient der aus der Festspannungsquelle 23 angelieferte Spannungswert zur Einstellung der Grundfrequenz, während der geschwindigkeitsabhängige Spannungswert des Tachogenerators zur Erzeugung einer geschwindigkeitsabhängigen Frequenz verwendet wird. Die Frequenz wird über den Spannungs-/Frequenzwandler 26 erzeugt, auf den die Ausgangsspannungen der Summierverstärker 20 und 25 geführt werden.

Einzelheiten dieser Maßnahmen zeigen die Fig. 3 und 4, wobei in der Fig. 3 die Frequenzänderung des Schweißstromes in Abhängigkeit von der Zeit dargestellt ist, während in der Fig. 4 die geschwindigkeitsabhängige Amplitudenänderung, als Funktion des Schweißstromes, über der Zeit veranschaulicht wird.

Über eine Relaiskarte 27 wird der mit geschwindigkeitsabhängiger Amplitude und geschwindigkeitsabhängiger Frequenz gepulste Gleichstromanteil dem Summierverstärker 28 zugeführt und hier dem aus einstellbaren Festspannungswert und geschwindigkeitsabhängigen Spannungswert aus der Festspannungsquelle 13 bzw. dem Tachogenerator 11 überlagert und schließlich an dem Regler 6 weitergegeben. Diese Überlagerung in Form eines von der Schweißgeschwindigkeit abhängigen Schweißstromes aus einem Gleichstromanteil und überlagertem Pulsanteil zeigt die Fig. 5.

## Patentansprüche

1. Verfahren zur Regelung des Schweißstromes in Abhängigkeit von der Schweißgeschwindigkeit bei Gleichstrom-Lichtbogenschweißeinrichtungen zur kontinuierlichen Längsnahtverschweißung zum Rohr geformter Metallbänder, bei dem zu einem einstellbaren Festspannungswert ein schweißgeschwindigkeitsabhängiger Spannungswert addiert wird, dadurch gekennzeichnet, daß der Summe aus dem geschwindigkeitsabhängigem Spannungswert und dem einstellbarem Festspannungswert ein gepulster Gleichspannungswert überlagert wird, der durch Addition eines weiteren einstellbaren Festspannungswertes sowie eines weiteren schweißgeschwindigkeitsabhängigen Spannungswertes gebildet wird, dessen Frequenz und dessen Amplitude in gleicher Weise von der Schweißgeschwindigkeit abhängen.

2. Verfahren nach Anspruch 1, dadurch gekennzeichnet, daß der einstellbare Festspannungswert zur Grundfrequenz- bzw. Grundamplitudeneinstellung dient, während der schweißgeschwindigkeitsabhängige Spannungswert zur Änderung der Grundfrequenz und/oder -amplitude herangezogen wird.

3. Schaltungsanordnung zur Durchführung des Verfahrens nach Anspruch 1 oder 2, bei der die Schweißelektroden (4) aus einer Spannungsquelle (1) über einen Transformator (2), ein den Schweißstrom einstellendes Stellglied sowie Gleichrichterelemente (3) gespeist werden und das Stellglied (7) von einem schweißgeschwindigkeitsabhängigen Tachogenerator (11) beeinflußt wird, der einem Regler (6) zugeschaltet ist, wobei der Tachogenerator (11) und eine Festspannungsquelle (13) mit ihren Ausgängen getrennt mit den Eingängen eines Summierverstärkers (15) verbunden sind, dessen Ausgang auf den Regler (6) einwirkt, und ein Ausgang dieses Reglers (6) mit dem Gleichstromwandler (5) verbunden ist, dadurch gekennzeichnet, daß dem ersten Summierverstärker (15) ein zweiter (28) nachgeschaltet ist, dessen weiterer Eingang von einem Spannungs/Frequenzwandler (26) gespeist wird, dessen Eingänge zwei weitere Summierverstärker (20, 25) mit jeweils ihren Eingängen zugeschaltetem Tachogenerator (16, 21) und Festspannungsquelle (18, 23) angeschlossen sind.

4. Schaltungsanordnung nach Anspruch 3, dadurch gekennzeichnet, daß zur Ergänzung aller schweißgeschwindigkeitsabhängigen Spannungswerte ein einziger Tachogenerator dient.

## Claims

1. Method for regulating the welding current as a function of the welding speed in DC arc welding devices for continuous longitudinal seam welding of metal strips which are formed into a tube, in the case of which a welding speed-dependent voltage value is added to an adjustable fixed voltage value, characterized in that the sum of the speed-dependent voltage value and of the adjustable fixed voltage value has a pulsed DC voltage value superimposed on it, which pulsed DC voltage value is formed by addition of a further adjustable fixed voltage value and a further welding speed-dependent voltage value, whose frequency and whose amplitude depend on the welding speed in the same manner.

2. Method according to Claim 1, characterized in that the adjustable fixed voltage value is used to adjust the fundamental frequency and the fundamental amplitude, while the welding speed-dependent voltage value is used to vary the fundamental frequency and/or amplitude.

3. Circuit arrangement for carrying out the method according to Claim 1 or 2, in the case of which the welding electrodes (4) are supplied from a voltage source (1) via a transformer (2), a control element which adjusts the welding current, and rectifier elements (3), and the control element (7) is influenced by a welding speed-dependent tachogenerator (11) which is connected to a regulator (6), the outputs of the tachogenerator (11) and of a fixed voltage source (13) being connected separately to the inputs of a summing amplifier (15) whose output acts on the regulator (6), and one output of this regulator (6) being connected to the DC/DC converter (5), characterized in that a second summing amplifier (28) is connected downstream of the first summing amplifier (15), the further input of said second summing amplifier (28) is supplied from a voltage/frequency converter (26) to whose inputs two further summing amplifiers (20, 25) are connected by means of a tachogenerator (16, 21) and a fixed voltage source (18, 23) which are in each case connected to the inputs of said further summing amplifiers (20, 25).

4. Circuit arrangement according to Claim 3, characterized in that a single tachogenerator is used to supplement all the welding speed-dependent voltage values.

## Revendications

1. Procédé pour régler le courant de soudage en fonction de la vitesse de soudage dans le cas d'installlations de soudage à l'arc électrique à courant continu, servant à réaliser des cordons de soudure longitudinaux continus pour faire un tube à partir de bandes de métal, mises en forme, procédé dans le cas duquel on ajoute à une valeur fixe de tension, que l'on peut régler, une valeur de tension fonction de la vitesse de soudage, procédé caractérisé en ce qu'à la somme qui se compose de la valeur de tension fonction de la vitesse de soudage et de la valeur fixe de tension, que l'on peut régler, on superpose une valeur de tension pulsée continue, qui est formée par l'addition d'une autre valeur de tension fixe, que l'on peut régler, et d'une autre valeur de tension, fonction de la vitesse de soudage, dont la fréquence et l'amplitude sont de la même manière fonction de la vitesse de soudage.

2. Procédé selon la revendication 1, caractérisé en ce que la valeur fixe de tension, que l'on peut régler, sert au réglage de la fréquence de base et de l'amplitude de base, tandis que la valeur de la tension, fonction de la vitesse de soudage, est utilisée pour modifier la fréquence de base et ou l'amplitude de base .

3. Circuit pour la mise en oeuvre du procédé selon la revendication 1 ou 2, dans le cas duquel les électrodes de soudage (4) sont alimentées à partir d'une source de tension (1) par l'intermédiaire d'un transformateur (2), d'un élément de réglage, qui règle le courant de soudage, ainsi que d'éléments de redressement (3) et en ce que l'élément de réglage (7) est influencé par un générateur tachymétrique (11) en fonction de la vitesse de soudage, qui est relié à un régulateur (6), le générateur tachymétrique (11) et une source de tension fixe (13) étant reliés séparément par leurs sorties aux entrées d'un amplificateur d'addition (15), dont la sortie agit sur le régulateur (6), une sortie de ce régulateur (6) étant reliée au transformateur pour courant continu (5), circuit caractérisé en ce que l'on monte en aval du premier amplificateur d'addition (15) un deuxième amplificateur d'addition (28), et en ce que l'autre entrée de ce second amplificateur d'addition est alimentée par un convertisseur tension-fréquence (26), dont les entrées sont raccordées à deux autres amplificateurs d'addition (20,25) ayant chacun respectivement leurs entrées raccordées à un générateur tachymétrique (16,21) et à une source de tension continue (18,23).

4. Circuit selon la revendication 3, caractérisé en ce que pour compléter toutes les valeurs de tension, fonction de la vitesse de soudage, on utilise un seul générateur tachymétrique.
